# EUROPEAN PATENT APPLICATION

(11) **EP 0 982 877 A1**
(43) Date of publication of application: **01.03.2000**
(21) Application number: 98306803.2
(22) Date of filing: 25.08.1998
(51) Int. Cl.: H04B 7/185

(54) **LEO mobile satellite communication system with access to base station according to position of the mobile**

(71) Applicant: ICO Services Ltd., London W6 9BN (GB)
(72) Inventor: Poisson, Lionel, London W4 1DD (GB)
(74) Representative: Musker, David Charles

(57) **Abstract**

A method of controlling access of a terminal (2) to a satellite communications network (6), comprising the steps of: storing location data in said terminal (2)defining at least one location (X) at which said terminal may communicate on a first basis; comparing at said terminal (2) said location data and position data defining the position (Y) of said terminal; and controlling said terminal (2) to grant access to said satellite communications system on said first basis or not, depending upon said comparison.

## Description

### FIELD OF THE INVENTION

This invention relates to communications with a mobile user, and particularly (but not exclusively) to such communications in which the link to the mobile user is via a satellite or satellites.

Terrestrial cellular communication systems are well known in the art and a number of standards, such as the GSM standard and the PCN standard exist which define different signalling protocols for them. Details of these standards are given for example in "Mobile Radio Technology" by Gordon White, Butterworth Heinemann, 1994. The GSM and PCN systems are digital communication systems and allow paging and data communications in addition to voice communications. In the GSM system. a short message service (SMS) is provided for transmitting short messages to mobile terminals.

In the GSM system, subscriber identity data is held in a removable card termed a Subscriber Identity Module (SIM). The SIM comprises a microprocessor, read only memory and random access memory, and communicates with the processor of the mobile terminal through a card reader. The communications in the basic GSM system are defined in recommendations 02.17 and 11.11, available from the European Telecommunications Standards Institute (ETSI). In the basic GSM system, the intention was to allow the processor of the mobile terminal to interrogate the SIM, to request data, which the SIM would then return. Such data could, for example be authentication data, or telephone numbers.

More recently, draft GSM technical specification 11.14, version 5.6.0 of December 1997 defines a phase 2+ upgrade to the SIM - mobile terminal interface. The upgrade adds what is referred to as the "SIM application tool kit". This "tool kit" is a set of procedures which can be used by applications (i.e. control programs) running on the processor of the SIM. In particular, the SIM can initiate actions to be taken by the mobile terminal (such as causing the terminal to display text supplied by the SIM, or to send a short message, or to set up a voice call); downloading data to the SIM from a telecommunications network (using the short message service and cell broadcast mechanisms) and call control by the SIM (allowing the SIM to allow, bar or modify a call requested by the user through the mobile terminal).

Mobile satellite communication systems have also been proposed in which radio frequency links are provided by a constellation of satellites. These satellite communication systems provide much greater coverage than terrestrial cellular systems. One example of such a system is the ICO™ system, aspects of which are described in patent publications WO 95/28747, WO 96/03814 and GB 2,295,296A. Other examples include the Iridium™ satellite cellular system, described for example in EP-A-0365885, and the Odyssey™ mobile communication system described for example in FP-A-0510789, EP-A-0575678 and EP-A-0648027.

An alternative proposed satellite cellular system is described in EP 0536921 and EP 0506255.

Such systems are primarily designed to facilitate mobile communications. However. they may also be used to support fixed or semi-fixed terminals. With fixed terminals, different constraints may apply.

For example. sources of electrical power other than batteries may be present. Equally. it may be possible to use higher gain antennas, electrically or mechanically directed towards the satellite. rather than azimuthally omnidirectional antennas.

Finally, reduced control procedures may be required since it will be known with greater precision where the terminal is located. enabling the selection of the relevant satellite, earth station and beam to be achieved more quickly and with less signalling.

Examples of fixed or semi-fixed terminals are payphone booths, or telephones on trains running on predetermined tracks. or terminals located at remote locations (for example in the Arctic or Antarctic regions).

For these reasons. it may be possible to offer service to such fixed or semi-fixed terminals under different conditions to fully mobile terminals (for example. on reduced tariffs).

One possibility might be to provide different signalling procedures for such terminals, to distinguish them. However, this would add to the complexity of the signalling process. Accordingly, such terminals will often employ the same signalling protocols as fully mobile terminals.

There is therefore the possibility that a fixed or semi-fixed terminal may be moved from its location, whilst continuing to benefit from the reduced rates offered.

Although not specifically designed to solve this problem. WO 96/16488 discloses a satellite communications system in which "local" and "global" users are provided, and the position of a user is tested by the network to determine whether it is "local" or "global". The network can then deny service to a "local" user outside its area.

The present invention provides an alternative solution to this problem. According to the present invention, the user terminal (preferably, the SIM thereof) stores an indication of the fact that it is only permitted to operate in a given area; reads its current position; and determines whether that position is within the area or not. If not, it may either prevents calls from being made or ensure that they are made at a higher tariff, or otherwise on less favourable terms.

Thus, even if a fixed or semi-fixed terminal is moved, or if the subscriber identity module thereof is removed and inserted into a mobile terminal, financial benefit is not obtained. Further, the processing overhead on the central network control computers is reduced, since positional based authorisation is performed by the user terminals.

Other aspects and preferred embodiments of the invention are as described or claimed hereafter, with advantages which will be apparent from the following.

### BRIEF DESCRIPTION OF THE DRAWINGS

Embodiments of the invention will now be described, by way of example only, with reference to the accompanying drawings, in which:
Figure 1 is a block diagram showing schematically the elements of a first communications system embodying the present invention;
Figure 2a is an illustrative is a block diagram showing schematically the elements of mobile terminal equipment suitable for use with the present invention; and
Figure 2b is a corresponding block diagram;
Figure 3 is a block diagram showing schematically the elements of an Earth station node forming part of the embodiment of Figure 1;
Figure 4 is a block diagram showing schematically the elements of a gateway station forming part of the embodiment of Figure 1;
Figure 5 is a block diagram showing schematically the elements of a database station forming part of the embodiment of Figure 1;
Figure 6 illustrates the contents of a store forming part of the database station of Figure 5;
Figure 7a illustrates schematically the beams produced by a satellite in the embodiment of Figure 1;
Figure 7b illustrates schematically the disposition of satellites forming part of Figure 1 in orbits around the earth;
Figure 8 is a flow diagram showing schematically the process of terminal access control performed by the user terminal in a first embodiment of the invention;
Figure 9 corresponds to Figure 8 and illustrates the operation of the user terminal in a second embodiment;
Figure 10 is a flow diagram showing schematically the process of terminal access control performed by the network end in the second embodiment; and
Figures 11a to 11c are illustrative diagrams showing the location of a terminal relative to predetermined tracks in three variants of a fourth embodiment.

### GENERAL ASPECTS OF EMBODIMENTS

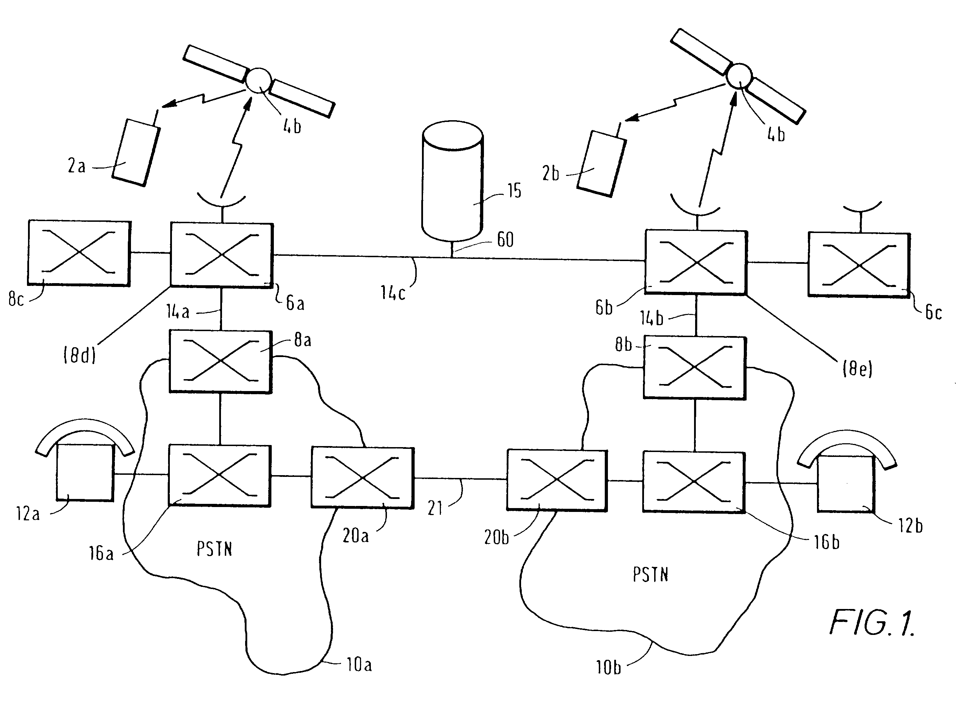

Referring to Figure 1, a satellite communications network according to this embodiment comprises mobile user terminal equipment 2a, 2b (e.g. handsets 2a and 2b); orbiting relay satellites 4a, 4b; satellite earth station nodes 6a, 6b; satellite system gateway stations 8a, 8b; terrestrial (e.g. public switched) telecommunications networks 10a, 10b; and fixed telecommunications terminal equipment 12a, 12b.

Interconnecting the satellite system gateways 8a, 8b with the earth station nodes 6a, 6b, and interconnecting the nodes 6a, 6b with each other, is a dedicated ground-based network comprising channels 14a, 14b, 14c. The satellites 4, earth station nodes 6 and lines 14 make up the infrastructure of the satellite communications network, for communication with the mobile terminals 2, and accessible through the gateway stations 8.

A terminal location database station 15 (equivalent to a GSM HLR) is connected, via a signalling link 60 (e.g. within the channels 14 of the dedicated network) to the gateway station and earth stations 6.

The PSTNs 10a, 10b comprise, typically, local exchanges 16a, 16b to which the fixed terminal equipment 12a, 12b is connected via local loops 18a, 18b; and international switching centres 20a, 20b connectable one to another via transnational links 21 (for example, satellite links or subsea optical fibre cable links). The PSTNs 10a, 10b and fixed terminal equipment 12a, 12b (e.g. telephone instruments) are well known and almost universally available today.

For voice communications, each mobile terminal apparatus is in communication with a satellite 4 via a full duplex channel (in this embodiment) comprising a downlink channel and an uplink channel, for example (in each case) a TDMA time slot on a particular frequency allocated on initiation of a call, as disclosed in UK patent applications GB 2288913 and GB 2293725. The satellites 4 in this embodiment are non geostationary, and thus, periodically, there is handover from one satellite 4 to another.

### Terminal 2

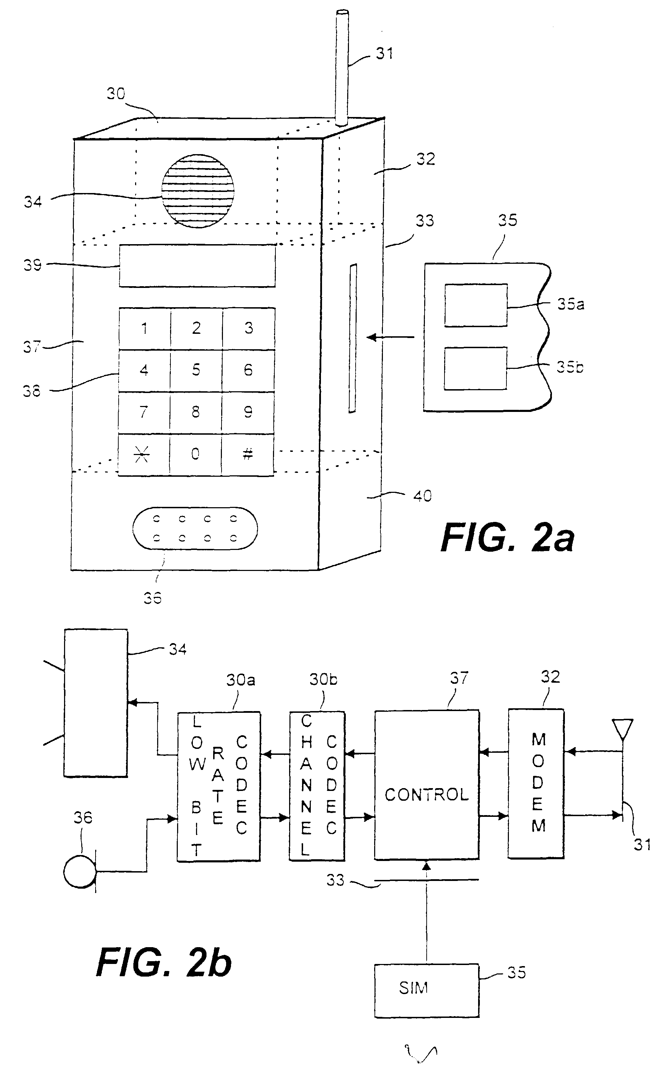

Referring to Figures 2a and 2b, a user terminal equipment 2a of Figure 1 is shown. In this embodiment, the terminal 2 is a semi-fixed terminal, for example a telephone booth for emergency use, installed in a remote village having a known position defined by co-ordinates X. The terminal is intended for use only at this location, until it is removed an reprogrammed.

The terminals 2a, 2b may be similar to those presently available for use with the GSM system, comprising a digital low rate coder/decoder 30, together with conventional microphone 36, loudspeaker 34, battery 40 and keypad components 38, and a radio frequency (RF) interface 32 and antenna 31 suitable for satellite communications. A display 39 (for example a liquid crystal display) and a 'smart card' reader 33 receiving a smart card (subscriber identity module or SIM) 35 storing user information are also provided.

Specifically, the SIM 35 includes a processor 35a and permanent memory 35b.

Also provided is a terminal control circuit 37 (which may in practice be integrated with the coder 30) consisting of a suitably programmed microprocessor, microcontrolleror digital signal processor (DSP) chip.

The control circuit 37 performs various functions including framing speech and data into TDMA time frames for transmission (and likewise demultiplexing received TDMA frames); and performing encryption or enciphering.

The coder/decoder (codec) 30 in this embodiment comprises a low bit rate coder 30a, generating a speech bit stream at around 3.6 kilobits per second, together with a channel coder 30b applying error correcting encoding, to generate an encoded bit stream at a rate of 4.8 kilobits per second.

The SIM 35 preferably complies with GSM Recommendations and/or Technical Specifications 02.17 ("Subscriber Identity Modules"), 11.11 and 11.14, and is preferably implemented as an industry standard "Smart Card as described in International Standards ISO 7810, 7811 and 7816; these and GSM 02.17, 11.11 and 11.14 are all incorporated herein by reference.

The SIM memory 35b stores various subscriber identity data including the international mobile subscriber identity (IMSI), which is a unique number associated with that SIM (and hence the subscriber to whom it belongs).

In these embodiments, the SIM is not merely a passive information store, but is capable of acting pro-actively, and of communicating with the network through the terminal 2, using the SIM Toolkit procedures.

A suitable SIM can be developed using the SIMphonlC™ SIM Toolkit development system available from De La Rue Card Systems, UK, or the GemPlus GemXplore™ 98 and GemXplore™ CASE development systems available from GemPlus, or equivalent systems available from Siemens, Schlumberger, Giesecke und Devrient and others.

The terminal processor 37 is programmed to operate the GSM 11.14 interface, allowing it to be controlled by the SIM 35, and to pass data from and to the SIM 35. It may be based on an existing GSM terminal which can do so, for example the Siemens S10, the Alcatel One Touch Pro, the Motorola CD90 or CD930, or the Ericsson 688 or 888.

Accordingly, the terminal processor 37 can interrogate the memory 35b of the SIM 35, and the SIM processor 35a can command the terminal processor 37 to execute commands defined in the SIM Toolkit, via the reader interface 33.

### Earth Station Node 6

The earth station nodes 6 are arranged for communication with the satellites.

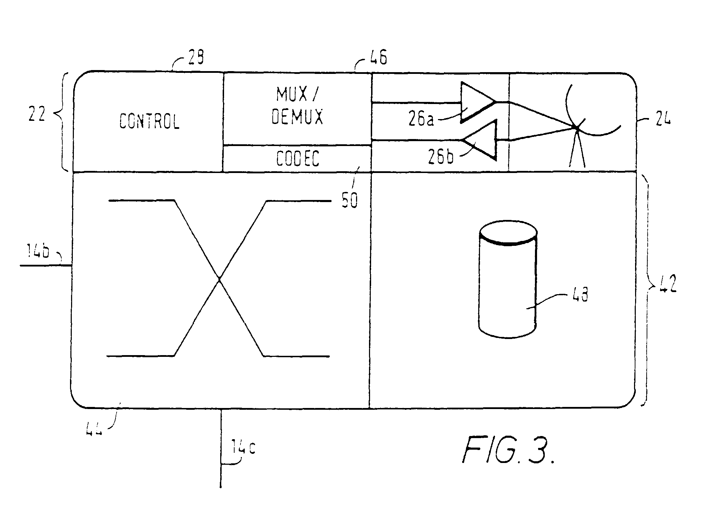

Each earth station node 6 comprises, as shown in Figure 3, a conventional satellite earth station 22 consisting of at least one satellite tracking antenna 24 arranged to track at least one moving satellite 4, RF power amplifiers 26a for supplying a signal to the antenna 24, and 26b for receiving a signal from the antenna 24; and a control unit 28 for storing the satellite ephemera data, controlling the steering of the antenna 24, and effecting any control of the satellite 4 that may be required (by signalling via the antenna 24 to the satellite 4).

The earth station node 6 further comprises a mobile satellite switching centre 42 comprising a network switch 44 connected to the trunk links 14 forming part of the dedicated network. A multiplexer 46 is arranged to receive switched calls from the switch 44 and multiplex them into a composite signal for supply to the amplifier 26 via a low bit-rate voice codec 50. Finally, the earth station node 6 comprises a local store 48 storing details of each mobile terminal equipment 2a within the area served by the satellite 4 with which the node 6 is in communication.

### Gateway 8

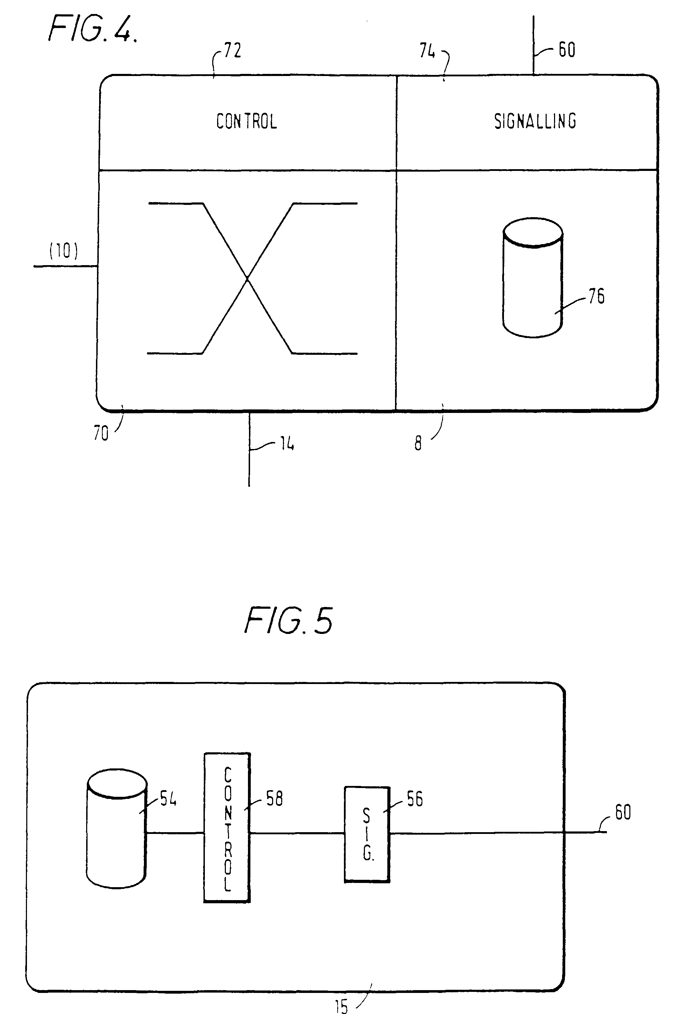

Referring to Figure 4, the gateway stations 8a, 8b comprise, in this embodiment, commercially available mobile switch centres (MSCs) of the type used in digital mobile cellular radio systems such as GSM systems. They could alternatively comprise a part of an international or other exchange forming one of the PSTNs 10a, 10b operating under software control to interconnect the networks 10 with the satellite system trunk lines 14.

The gateway stations 8 comprise a switch 70 arranged to interconnect incoming PSTN lines from the PSTN 10 with dedicated service lines 14 connected to one or more Earth station nodes 6, under control of a control unit 72. The control unit 72 is capable of communicating with the data channel 60 connected to the database station 15 via a signalling unit 74, and is arranged to generate data messages in some suitable format (e.g. as packets or ATM cells).

Also provided in the gateway stations 8 is a store 76 storing billing, service and other information relating to those mobile terminals 2 for which the gateway station 8 is the home gateway station. Data is written to the store 76 by the control unit 72 after being received via the signalling unit 74 or switch 70, from the PSTN 10 or the Earth station nodes 6 making up the satellite network. This store acts in the manner of a visiting location register (VLR) of a terrestrial GSM network, and a commercially available VLR may therefore be used as the store 76.

### Database Station 15

Referring to Figure 5 the database station 15 comprises a digital data store 54, a signalling circuit 56, a processor 58 interconnected with the signalling circuit 56 and the store 54, and a signalling link 60 interconnecting the database station 15 with the gateway stations 8 and Earth stations 6 making up satellite system network, for signalling or data message communications.

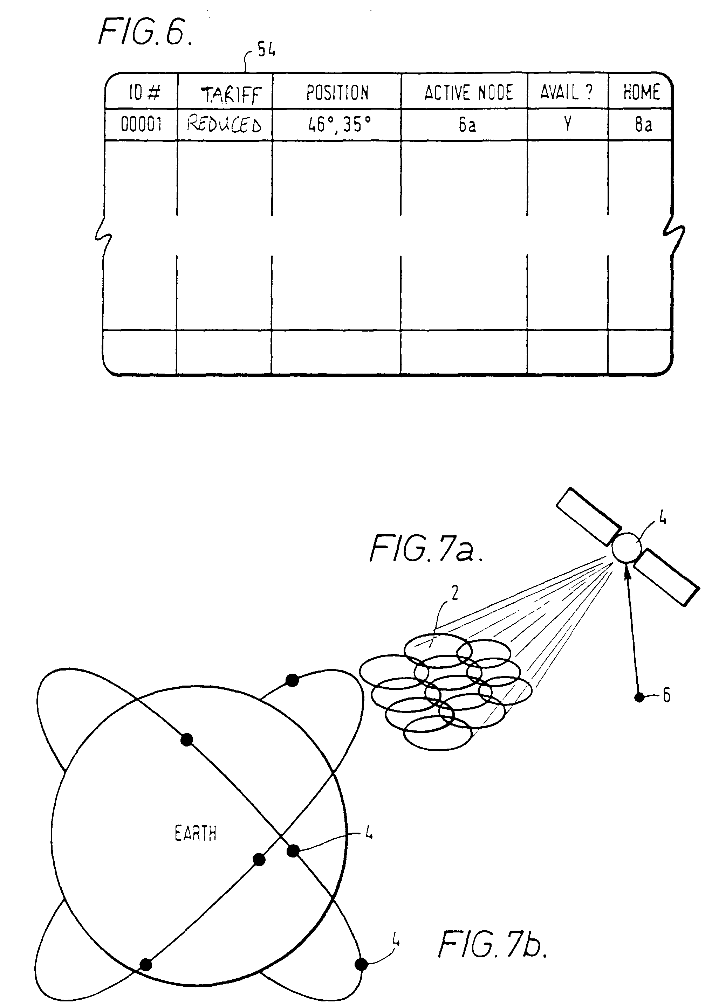

The store 54 contains, for every subscriber terminal apparatus 2, a record showing the identity (e.g. the International Mobile Subscriber Identity or IMSI); the current status of the terminal 2 (whether it's tariff is "fixed" or "mobile" as will be disclosed in greater detail below); the current geographical position of the mobile terminal 2 (in co-ordinate geometry); the "home" gateway station 8 with which the apparatus is registered (to enable billing and other data to be collected at a single point) and the currently active Earth station node 6 with which the apparatus 2 is in communication via the satellite 4. The contents of the store are indicated in Figure 6.

The signalling unit 56 and processor are arranged to receive interrogating data messages, via the signalling circuit 60 (which may be a packet switched connection), from gateways 8 or nodes 6. comprising data identifying one of the mobile terminals 2 (for example. the telephone number of the equipment 2). and the processor 58 is arranged to search the store 54 for the status and active earth station node 6 of the terminal 2 and to transmit these in a reply message via the data line 60.

Thus. in this embodiment the database station 15 acts to fulfil the functions of a home location register (HLR) of a GSM system, and may be based on commercially available GSM products.

Periodically, the earth station nodes measure the delay and Doppler shift of communications from the terminals 2 and transmit these to the database station 15, which calculates the rough terrestrial position of the mobile terminal apparatus using the differential arrival times and/or Doppler shifts in the received signal, and knowledge of which beams of which satellites 4 the signal was received through. The position is then stored in the database 48.

Further details of one suitable procedure are disclosed in (IDEA 68 - details please), incorporated herein by reference in its entirety.

### Satellites 4

The satellites 4a, 4b comprise generally conventional communications satellites such as the HS601 available from Hughes Aerospace Corp, California, US, and may be as disclosed in GB 2288913. Each satellite 4 is arranged to generate an array of beams covering a footprint beneath the satellite, each beam including a number of different frequency channels and time slots, as described in GB 2293725 and illustrated in Figure 7a.

On each beam, the satellite therefore transmits a set of downlink frequencies. The downlink frequencies on adjacent beams are different, so as to permit frequency re-use between beams. Each beam therefore acts somewhat in the manner of a cell of a conventional terrestrial cellular system. For example, there may be 61, 121 or 163 beams

In this embodiment each downlink frequency carries a plurality of time division channels, so that each mobile terminal communicates on a channel comprising a given time slot in a given frequency.

Within each beam there is also provided a common broadcast control channel (equivalent to the broadcast common control channel or BCCH of the GSM system) which occupies at least one of the frequencies for each beam; the frequencies used by the broadcast control channels of the beams are stored within each mobile terminal 2 which is arranged to scan these frequencies.

The satellites 4a are arranged in a constellation in sufficient numbers and suitable orbits to cover a substantial area of the globe (preferably to give global coverage).

For example 10 (or more) satellites may be provided in two mutually orthogonal intermediate circular orbits (or more) at an altitude of, for example, 10.500 kilometres (6 hour orbits) as shown in Figure 7b. Equally, however, larger numbers of lower satellites may be used, as disclosed in EP 0365885, or other publications relating to the Iridium system, for example.

Thus far, the operation of the invention corresponds generally to an adaptation to the satellite environment of the terrcstrial GSM system, with the addition of the use of multiple penetration levels as discussed above.

### FIRST EMBODIMENT

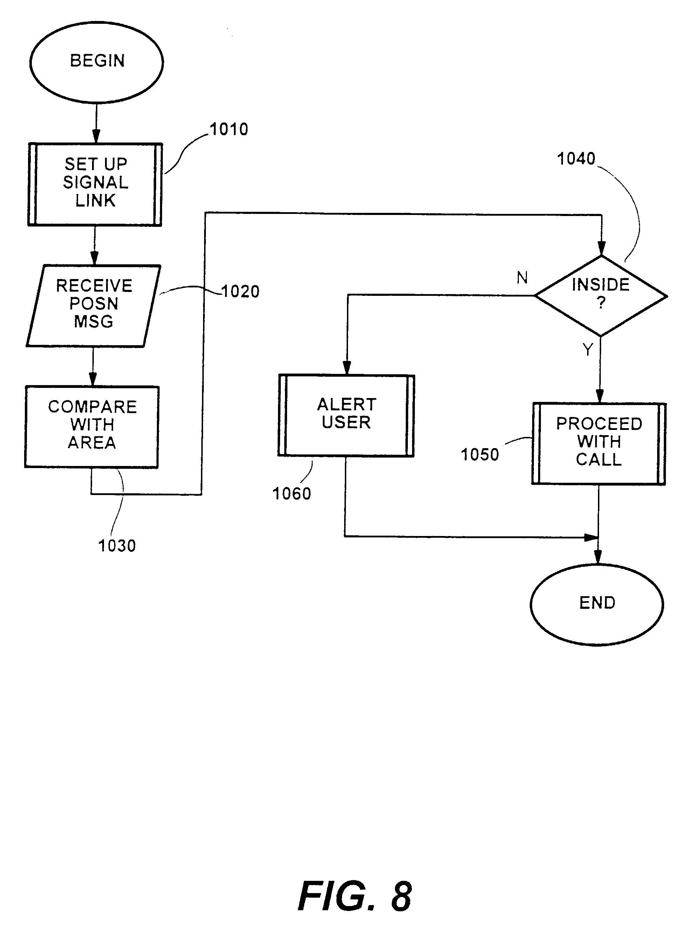

This embodiment of the invention will now be further described with references to Figure 8.

In this embodiment, the terminal 2 is a semi-fixed terminal. for example a telephone booth for emergency use, installed in a remote village having a known position defined by co-ordinates X. The terminal is intended for use only at this location, until it is removed an reprogrammed.

The position of the terminal 2 is tracked. The position may be determined, in coarse terms, by location updating procedures (equivalent to those of GSM), in which the terminal 2 signals, via the satellites 4, the identity of the beams which it can receive (these identities being signalled on a broadcast channel of each beam). As in GSM, such location updating is performed either when the identity of the beams changes, or at periodic intervals, or where the terminal rcgisters with or de-registers from the network, or all three.

Additionally, more precise terminal location is performed by the system, making use of the (precisely known) orbits of the satellites, and the times and frequencies of their transmissions. For each satellite, the signal delay between the satellite and the terminal is a measure of the distance between the two (the slant path) such that a given delay defines a spherical surface intersecting that of the earth at an arc along which the terminal must lie.

The Doppler shift in frequency of a satellite transmission, as measured at the terminal, or vice versa, is a measure of the relative velocity between the satellite and the terminal. Since the velocity of the satellite is high compared to that of the terminal, the velocity of the later may be ignored, so that the measured Doppler shift indicates the position on the delay arc, relative to the sub-satellite point, of the terminal (i.e. how far in front or behind the sub satellite point of the terminal is).

Thus, measurements from a single satellite can yield two possible terminal positions (one at each side of the sub-satellite point), the ambiguity between which can be resolved by using the identity of beam detected by the terminal, or by using a second set of measurements from a different satellite (since they will in general to be two or more satellites in view).

Since calculations from several satellites may be involved, the determination of the terminal position is conveniently performed at the database station 15. The position thus obtained is stored in the database 48 therein (as shown in Figure 6), and signalled therefrom to the satellite or satellites with which the mobile terminal is in communication, to be stored in the databases thereof. This position is referred to as the "Stored Last Registered Position" (SLRP).

Thus far, the operation of the invention does not differ substantially from that described in (J22805, IDEA 68 and so on).

A first embodiment of the invention will now be described. In this embodiment. the SIM 35 contains a processor 35a which supports the SIM toolkit protocols. Accordingly, it operates under control of an operating system 352 and an application 354, both of which are stored in the memory 35b.

The operating system is arranged to communicate with the processor 37 of the terminal 2 using the SIM toolkit procedures defined in GSM recommendation 11.14, to pass data to and from the application 354. It may for example be the STARSIM operating system of Giesecke und Devrient, Munich, Germany, or that of one of the other suppliers identified above.

The operation of the terminal 2 under control of the application 154 will now be described with reference to Figure 8.

Where an outgoing call from the terminal 2 is to be established, a signalling link is set up in a process identified as 1010. The details are not germane to the present invention. but briefly, the terminal 2 is already in, or enters upon switching on, and "idle" mode in which it receives broadcast control channels (equivalent to the BCCH of GSM) from one or more beams of a satellite 4, enabling it to identify a random access hailing channel (equivalent to the RACH of GSM).

On the terminal 2 initiating a call (e.g. by the user pressing a switch or lifting a handset to place the terminal in the off-hook condition), the terminal 2 generates a link request signal on the random access channel, and awaits an acknowledgement signal from the earth station node 6 via the satellite 4.

On successful receipt of the request signal, the earth station node 6 transmits back an acknowledgement signal. Thereafter, the earth station node 6 signals to the database station 15, which allocates a satellite, beam, earth station and frequency to be used for communicating with the terminal 2 and signals these to the earth station 4, which then transmits a message to the terminal 2 allocation a signalling channel to be used (e.g. one or more time slots at one or more particular frequencies).

Next, authentication data held on the SIM 35 is sent to identify and authenticate the terminal 2. At the database station 15, this is used to select the tariff for the terminal.

At this stage, then, a relatively low bit rate signalling channel is established over which short messages may be transmitted to and from the terminal 2.

Next, in step 1020, the earth station 6 generates a short message consisting of an initial "SIM data download" identification code, followed by position data. The identification code indicates that this is a short message for controlling the SIM, and the position data indicates the stored last registered position held in the database 48.

On receipt of this message, the terminal processor 37 passes the message to the SIM card 35 using the SMS-PP procedure (section 7.1.1) of recommendation 11.14.

The processor 35a of the SIM card 35 compares (step 1030) the received position with the position X stored within the memory 35b. If the two are within a predetermined distance D, they are treated as coincident. The distance D corresponds with the maximum inaccuracy of the positional measurement performed by the database station 15.

If (step 1040) the calculation performed at step 1030 indicates that the last recorded position corresponds to the position X at which the terminal is to be used, then (step 1050) the SIM 35 allows process of setting up a call by the terminal 2 to continue, by establishing a traffic channel to carry speech or data.

If, on the other hand, it is determined in step 1040 that the distance between the point X and the last recorded position received from the network exceeds the maximum permitted distance D, then (step 1060) the SIM processor 35a supplies to the terminal processor 37 a message for display on the display 39 of the terminal, using the 'proactive SIM' DISPLAY TEXT (high priority) defined in GSM 11.14 section 6.4.1, the message indicating that the terminal 2 is to be denied service because it is outside its permitted region of use.

Thereafter, the SIM processor 35a under control of the application 354 terminates the call by controlling the terminal processor 37 to go on-hook, using the SIM call control features of GSM 11.14 section 9 (specifically the Barred Dialling Number (BDN) of section 9.4 thereof. Subsequent, conventional, call clear down signalling is then performed.

Thus, in this embodiment, operation of the network side (comprising the satellites 4, Earth station 6, database station 15 and so on) of a satellite communications system is modified to include a step of transmitting the last recorded position of a terminal at the beginning of each outgoing call attempt by that terminal.

Operation of the terminal 2 itself is unmodified. except for the SIM 35. The SIM carries an application, operating through the SIM toolkit, which reads the last recorded position transmitted by the network, compares it with a stored position, and denies service if the two do not match.

Thus, in use, if an attempt is made to move the terminal to a different position (i.e. to use it like a conventional mobile terminal rather than a fixed terminal), service will be denied. It would, of course, be possible to move the terminal if the SIM 35 were replaced, but in this case, a normal tariff rather than the tariff applicable to a fixed terminal would be charged.

### SECOND EMBODIMENT

Features and steps of this embodiment which are common with those of the first embodiment are given the same reference numerals, and will not be further discussed. In this embodiment, however, if a terminal is away from its permitted position, then it is charged at a different tariff rather than being denied service.

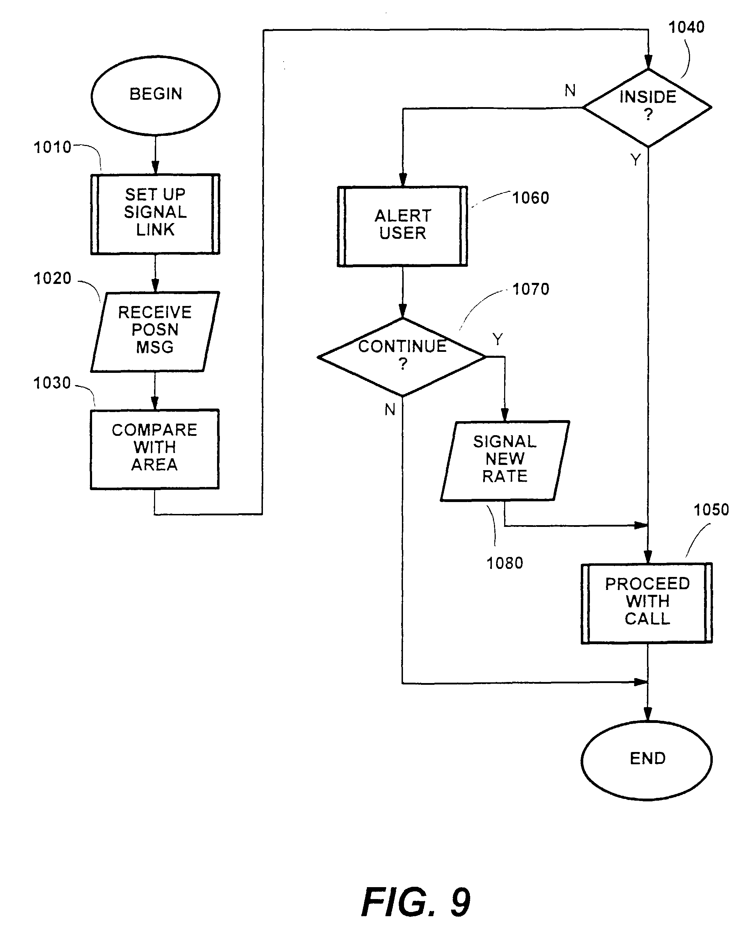

Referring to Figure 9, the application 354 performs steps 1010 to 1060 as described above, except that the message displayed on the display 39 in step 1060 indicates that the terminal is out of its position, but the call may proceed at a secondary (higher) rate if required, and offers the user the options of continuing or terminating the call, on a displayed menu (using the GET INKEY tool kit procedure defined in section 6.4.2 of GSM 11.14).

If (step 1070), the user elects not to continue, then the SIM processor 35a terminates the call attempt as in the first embodiment above.

If (step 1070) the user elects to continue, then in step 1080. the SIM processor 35a generates a short message using the SEND SHORT MESSAGE procedure of section 6.4.10 GSM 11.14, indicating that a higher call rate is to be charged. The terminal then proceeds to set up the call in step 1050.

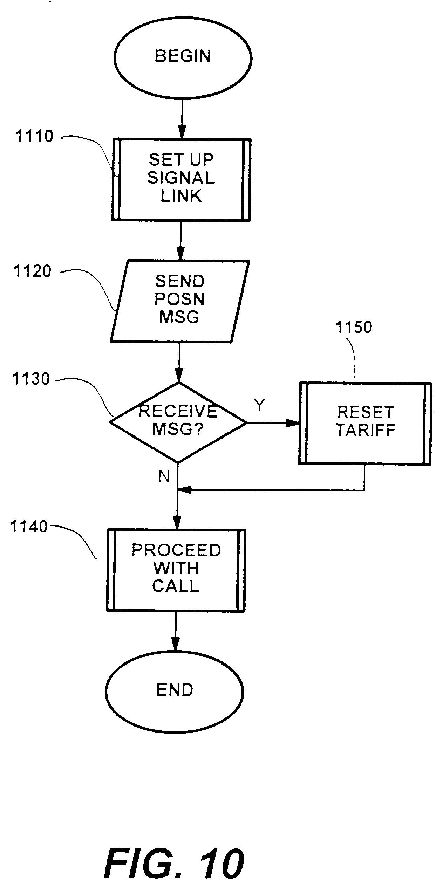

Referring to Figure 10, on the network side, having set up the signalling link (procedure 1110) and sent a position message in step 1120 indicating the stored last recorded position, in step 1130, the earth station node 6 determines whether any message was transmitted in step 1080 from the terminal 2. If not, then in step 1140 the next stages in setting up or dropping the call attempt are performed.

If a tariff SMS signal is received (step 1130) and identified as such by its header, then in procedure 1150, the tariff rate applicable to the call is altered, as the short message is forwarded to the database station 15 at which the applicable tariff for the call is reset to a secondary rate (e.g. the normal mobile terminal roaming rates).

The call then proceeds to be set up as in the first embodiment, to be changed at the secondary rate.

### THIRD EMBODIMENT

In the first and second embodiments, the terminal position was determined at the database station and signalled to the terminal 2. In this embodiment, steps 1020 and 1120 of the above described embodiments are omitted, and instead the terminal is operative to crudely measure its own position, using the location area code (LAC) and cell ID of the beams with which it is in communication. The SIM is arranged to request this information at the beginning at each call from the terminal 37, using the PR()VIDE LOCAL INFORMATION command procedure of GSM 11.14 section 6.4.15.

The SIM 35a stores a list of details of the beams which will sweep over the terminal 2 over time, and compares the provided details with these, to allow or bar a call as above depending on whether the detected cell ID is on the list. The list may be periodically updated via a SIM download SMS message.

### FOURTH EMBODIMENT

In this embodiment, the terminal 2 is installed in a vehicle having a predetermined route; for example, a train, bus or aeroplane. The operation of this embodiment corresponds to that of the first or second embodiments, except that the SIM 35 stores data defining a route between points X₁ and X₂, rather than a position X.

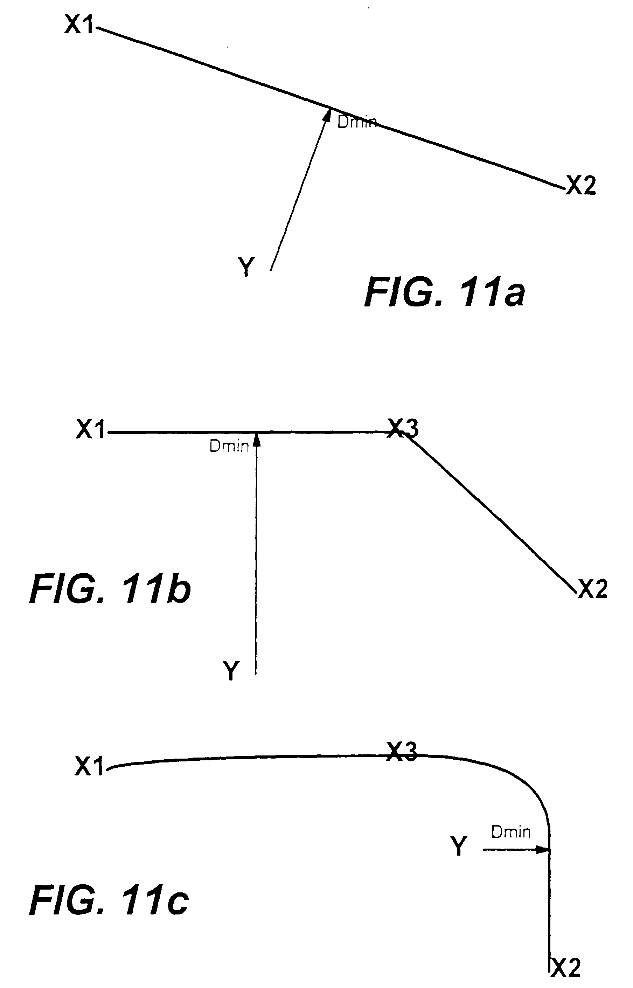

Where the route is relatively straight, for example, the data may comprise the co-ordinates of X₁ and X₂, and the comparison step 1030 in this case consists of determining the minimum distance D from the straight line between X₁ and X₂ - i.e. Dmin of Figure 11a - and the decision step 1040 tests Dmin against the maximum allowed value D, to define the allowed corridor.

Where the route is not straight, the data may comprise additional points (such as X3) making a piecewise - linear approximation to the route (Fig 11b), or defining a curve (e.g. a spline) to which Dmin is calculated (Fig. 11c).

### SUMMARY

It will be seen that the proceeding embodiments provide a terminal intended to be used at a predetermined position, in which the terminal itself checks its current position against the predetermined position and controls access to the network in dependence upon the relationship between the two, for example to deny service or to charge it at a higher rate. Other forms of control would be possible; for example, rather than charging at a higher rate, the terminal might be made to operate at a lower bandwidth (e.g. at half rate rather than full rate coding).

By providing that the position checking and call control is performed locally at the terminal, the network is relieved of a substantial number of position calculations, comparisons and decisions which would otherwise be necessary.

Moreover, since the number of such semi-fixed terminals is expected to be low compared to the number of fully mobile terminals, the need for the network to perform such additional processing steps for all terminals, when it will be unnecessary for most, is reduced.

By providing the extra functionality as an application (or part thereof) on an SIM card, and allowing the SIM card to control the operation of the terminal 2 using the tool kit routines, it is possible to make semi-fixed terminals which, except for the SIM card, comprise the same components as mobile terminals. Thus, the cost of providing such terminals (in limited numbers) is reduced, making it more possible to provide public service and emergency telephone cover to remote and underdeveloped regions.

### OTHER EMBODIMENTS

It will be clear from the foregoing that the above described embodiment is merely one way of putting the invention into effect. Many other alternatives will be apparent to the skilled person and are within the scope of the present invention.

For example, it would be technically possible to use a position system located beyond the terminal 2; for example, a GPS receiver. However, this is not preferred, since such a device could be simulated, to supply a position equivalent to X, thereby enabling a user to move the terminal but still take account of the lower rate in a dishonest manner.

The numbers of satellites and satellite orbits indicated are purely exemplary. Smaller numbers of geostatiunary satellites, or satellites in higher altitude orbits, could be used; or larger numbers of low earth orbit (LEO) satellites could be used. Equally, different numbers of satellites in intermediate orbits could be used.

Equally, whilst the principles of the present invention are envisaged above as being applied to satellite communication systems, the possibility of the extension of the invention to other communications systems (e.g. digital terrestrial cellular systems such as GSM) is not excluded.

It will be understood that components of embodiments of the invention may be located in different jurisdictions or in space. For the avoidance of doubt, the scope of the protection of the following claims extends to any part of a telecommunications apparatus or system or any method performed by such a part, which contributes to the performance of the inventive concept.

## Claims

1. A method of controlling access of a terminal (2) to a communications network (6), comprising the steps of:
storing location data in said terminal (2) defining at least one location (X) at which said terminal may communicate on a first basis;
comparing at said terminal (2) said location data and position data defining the position (Y) of said terminal; and
controlling said terminal (2) to grant access to said communications system on said first basis or not, depending upon said comparison.

2. A method according to claim 1, in which said terminal (2) comprises a removable processor (35) and a terminal control circuit (37) arranged to communicate together.

3. A method according to claim 2, in which said location data are held in said removable processor (35).

4. A method according to claim 2 or claim 3, in which said removable processor (35) is arranged to perform said comparisons.

5. A method according to claim 4, in which said removable processor is arranged to control said terminal control circuit (37) to control access to said satellite communications system (6) in dependence upon said comparison.

6. A method according to any preceding claim, in which said terminal (2) is arranged to deny access to said network (6) where said position data does not correspond to said location data.

7. A method according to any of claims 1 to 5, in which said terminal (2) is arranged to access said network (6) at a different tariff where said position data does not correspond to said location data.

8. A method according to any preceding claim, further comprising the step of signalling said position data to said terminal (2) from said network (6,15).

9. A method according to claim 8 appended to claim 2, comprising signalling said position data as a message recognised by said terminal (2) as being for said removable processor (35).

10. The method of any preceding claim, in which the network includes a satellite link.

11. A terminal (2) for communicating with a communications network (6), comprising;
means (35) for storing location data defining at least one location (X) at which said terminal may communicate on a first basis;
means (35) for comparing said location data and position data defining the position (Y) of said terminal; and
means (35) for controlling said terminal (2) to grant access to said communications network on said first basis or not, depending upon said comparison.

12. A terminal (2) according to claim 11, comprising a removable processor (35) and a terminal control circuit (37) arranged to communicate together.

13. A terminal according to claim 12, in which said location data are held in said removable processor (35).

14. A terminal according to claim 12 or claim 13, in which said removable processor (35) is arranged to perform said comparisons.

15. A terminal according to claim 14, in which said removable processor is arranged to control said terminal control circuit (37) to control access to said communications network (6) in dependence upon said comparison.

16. A terminal (2) according to any of claims 11 to 15, said terminal being adapted to communicate with a satellite.

17. A removable processor for a terminal according to any of claims 12 to 16. or for use in the method of any of claims 2, or 3 to 9 when appended thereto.
